## Europäisches Patentamt

## European Patent Office

## Office européen des brevets

(11) Numéro de publication: **0 206 872**
**B1**

(12) **FASCICULE DE BREVET EUROPÉEN**

(45) Date de publication du fascicule du brevet:
02.08.89

(21) Numéro de dépôt: 86401139.0

(22) Date de dépôt: 29.05.86

(51) Int. Cl.⁴: **B 62 B 3/02,** B 62 B 3/10

(54) Dispositif repliable pour le transport et/ou la manutention d'objects ou d'articles en vrac.

(30) Priorité: 29.05.85 FR 8508034
27.09.85 FR 8514370

(43) Date de publication de la demande:
30.12.86 Bulletin 86/52

(45) Mention de la délivrance du brevet:
02.08.89 Bulletin 89/31

(84) Etats contractants désignés:
AT BE CH DE FR GB IT LI LU NL SE

(56) Documents cité:
EP-A-0 090 668
GB-A-1 179 194
GB-A-2 113 625
US-A-2 470 040
US-A-2 901 262
US-A-3 118 553
US-A-3 804 432

(73) Titulaire: **SOCIETE D'EQUIPEMENT MENAGER INDUSTRIEL ET COMMERCIAL S.E.M.I.C.O.: Société Anonyme, 4, rue de Garches, F-92210 Saint Cloud (FR)**

(72) Inventeur: **Balland, Denis, Le Moulin Fremifontaine, F-88700 Rambervillers (FR)**

(74) Mandataire: **Rodhain, Claude, Cabinet Claude Rodhain 30, rue la Boétie, F-75008 Paris (FR)**

LIBER, STOCKHOLM 1989

## Description

L'invention concerne un dispositif qui est destiné au transport ou à la manutention d'objets de dimensions relativement importantes tels que des cartons ou des éléments de mobilier et également au transport d'objets en vrac tels que les divers achats effectués dans un magasin à grande surface.

Pour le transport d'objets importants il est souhaitable de disposer de dispositifs de transport tels que des diables qui permettent de déplacer sans fatigue des objets volumineux et/ou de poids important tels que des appareils électroménagers. Un tel dispositif étant utilisé assez rarement il est nécessaire qu'il soit repliable de manière à occuper une faible place lorsqu'il n'est pas utilisé.

Un autre problème important est celui du transport et de la manutention des achats effectués dans un magasin à grande surface. Actuellement, le magasin à grande surface met des chariots de grande capacité à la disposition des usagers pour que ceux-ci puissent y déposer en vrac les achats qu'ils effectuent. Lors du passage à la caisse, le magasin fournit généralement des sacs en plastique dans lesquels on place les achats effectués au fur et à mesure de leur facturation. Ces sacs en plastique sont à la fois peu solides et peu pratiques, or l'usager doit les manipuler d'une part pour vider le chariot fourni par le magasin dans son véhicule puis ensuite pour vider le coffre de son véhicule pour les emmener à son domicile, ce dernier transport pouvant s'effectuer sur un trajet relativement long compte-tenu des possibilités de parking. Il serait donc souhaitable que les usagers disposent d'un moyen de transport qui permette en particulier de transporter sans fatigue leurs achats depuis leur véhicule jusqu'à leur domicile lorsque la distance est élevée.

Par ailleurs, les chariots fournis par les magasins à grande surface peuvent être emportés en dehors des limites du magasin et les magasins à grande surface doivent renouveler une partie importante de leur parc de chariots chaque année; par ailleurs, ces chariots peuvent créer des dégâts aux véhicules se trouvant sur le parking du magasin lorsqu'ils sont abandonnés n'importe où.

Une solution contre le vol de ces chariots, qui permet également de fixer les chariots inutilisés en des endroits précis, consiste à accrocher les chariots à un système de fixation qui est libéré au moyen d'une pièce de monnaie, par exemple une pièce de dix francs. Cette dernière disposition ne permet cependant pas en fait de réduire notablement le vol des chariots fournis par le magasin.

On connaît en outre (voir le brevet US-2 470 040), un chariot destiné à servir de porte-bébé comprenant une embase munie de deux roues avant, deux montants latéraux verticaux et un unique support de roue arrière. Il résulte de la structure de ce chariot que lorsqu'il est plié, sa largeure reste constante.

C'est pourquoi la présente invention se propose de fournir un dispositif repliable destiné au transport et/ou à la manutention d'objets ou d'articles en vrac qui peut être replié de manière à occuper un faible volume et qui peut être utilisé en particulier pour le transport jusqu'au domicile des usagers des achats effectués dans un magasin à grande surface.

Le dispositif repliable selon l'invention comporte deux montants latéraux verticaux articulés selon un axe horizontal transversal sur une embase comprenant deux supports de roue avant et deux supports de roue arrière également articulés selon un axe horizontal transversal sur ladite embase.

Ce dispositif est notamment remarquable en ce que, de chaque côté dudit dispositif, le support latéral vertical le support de roue avant et le support de roue arrière sont tous montés à articulation l'un sur l'autre de telle manière que, lorsque le montant latéral vertical tourne en direction du support de roue avant, le support de roue arrière effectue une rotation antagoniste avec une vitesse de rotation sensiblement double, et en ce que les deux supports de roue avant sont articulés entre eux de manière à venir se placer l'un contre l'autre.

Selon une autre caractéristique de l'invention, le support de roue arrière est articulé directement sur l'embase et sur le montant latéral vertical, le montant latéral vertical est articulé sur l'embase par l'intermédiaire d'une biellette et les axes d'articulation respectifs de la biellette sur l'embase, du montant latéral vertical sur le support de roue arrière et du support de roue arrière sur l'embase sont sensiblement alignés dans cet ordre lorsque le dispositif est déplié.

Selon encore une autre caractéristique de l'invention l'embase comporte deux montants latéraux reliés entre eux par deux éléments diagonaux chaque élément diagonal étant articulé à une de ses extrémités sur un desdits montants latéraux et son autre extrémité étant reliée à articulation avec le montant latéral vertical correspondant.

D'autres caractéristiques et avantages de l'invention ressortiront de la description qui suit ainsi que des dessins ci-annexés sur lesquels:

- la Fig. 1 représente un dispositif de transport conforme à l'invention utilisé pour le transport des achats effectués dans un grand magasin;
- la Fig. 2 illustre une deuxième possibilité d'utilisation du dispositif de transport de la figure 1 pour les achats dans un magasin à grande surface;
- la Fig. 3 montre en perspective la disposition des différents paniers dans le cas de l'utilisation dans un magasin à grande surface;
- la Fig. 4 illustre l'utilisation en tant que diable pour le transport de paquets volumineux;
- la Fig. 5 représente en vue de profil le chariot du dispositif selon l'invention;
- la Fig. 6 représente le panier principal du dispositif selon l'invention;

- la Fig. 7 représente le chariot équipé simplement du panier principal de manière à constituer un diable, le panier principal servant d'organe de manoeuvre du dispositif;

- la Fig. 8 représente le chariot vu de profil à l'état replié;

- la Fig. 9 est une vue de dessus correspondant à la figure 8;

- la Fig. 10 représente le chariot replié placé dans le panier principal;

- la Fig. 11 représente l'ensemble des paniers supplémentaires gerbés l'un dans l'autre;

- la Fig. 12 représente en vue de profil le dispositif complet avec l'ensemble des chariots;

les Figs 13 et 14 représentent en vue de face et en vue de dessus le chariot;

- les Figs 15 à 18 sont des vues de détail du chariot;

- les Figs 19 à 20 illustrent le dispositif de blocage des paniers supplémentaires sur le chariot;

- la Fig. 21 illustre le dispositif de fixation du panier principal sur le chariot;

- la Fig. 22 illustre la fixation du panier principal sur un panier supplémentaire;

- la Fig. 23 représente un dispositif de verrouillage du panier principal sur le chariot;

- la Fig. 24 est une vue partielle en perspective d'un panier supplémentaire;

- les Figs 25 et 26 illustrent le dispositif d'accrochage des paniers supplémentaires entre eux lorsqu'ils sont gerbés;

- la Fig. 27 représente une variante de l'invention dans laquelle on utilise des paniers en matière souple;

- la Fig. 28 représente en position repliée le chariot dans cette variante de réalisation;

- les Figs 29 et 30 représentent en vue de profil et en vue longitudinale un panier souple utilisé dans cette variante de réalisation;

- La Fig. 31 illustre la fixation d'un panier sur le chariot;

- La Fig. 32 représente partiellement le chariot équipé pour être utilisé comme diable;

- Les Figs. 33 et 34 illustrent le dispositif de verrouillage du chariot dans cette variante de réalisation et

- la Fig. 35 illustre l'utilisation de cette variante de réalisation avec un siège de porte-bébé;

- la figure 36 est une vue en perspective d'un autre mode de réalisation du chariot repliable selon l'invention en position d'utilisation;

- la figure 37 est une vue de profil du chariot de la figure 36;

- les figures 38 et 39 sont des vues de détail du chariot de la figure 36;

- la figure 40 représente le chariot de la figure 1 lors de son repliage;

- la figure 41 est une vue correspondant à la figure 5 représentant le chariot à l'état entièrement replié;

- la figure 42 est une vue de dessous du chariot à l'état replié, et

- la figure 43 est une vue de détail illustrant le mode de fixation des paniers;

- la figure 44 est une vue en perspective d'un autre mode de réalisation de l'invention;

- la figure 45 représente le chariot repliable de la figure 44 en position repliée et vu de dessus;

- la figure 46 est une vue en perspective de détail montrant la réalisation d'un porte-bébé;

- la figure 47 est un schéma explicatif du dispositif d'articulation du chariot de la figure 44.

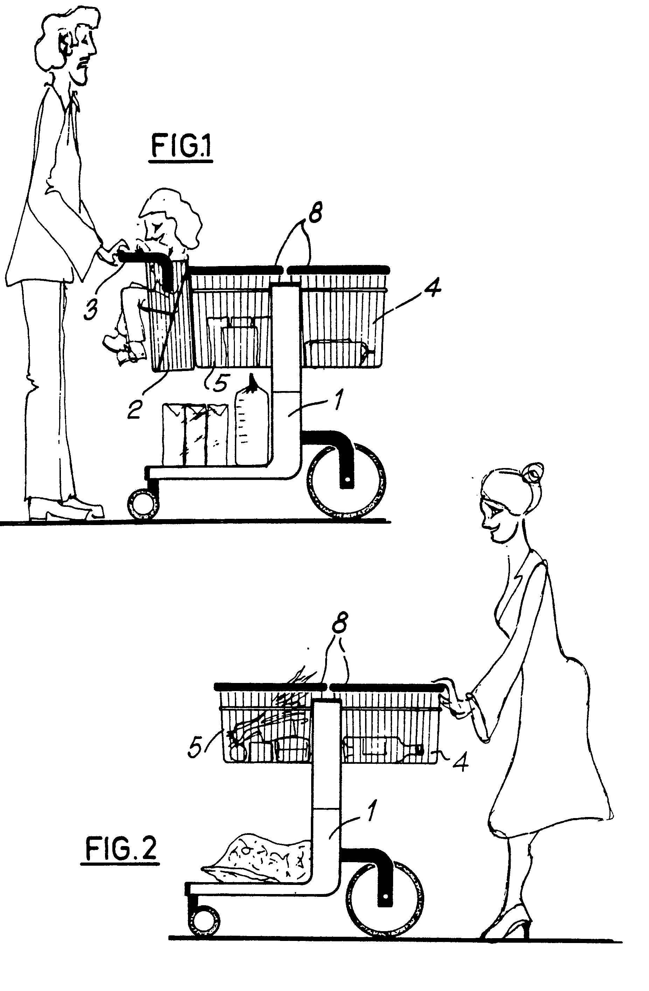

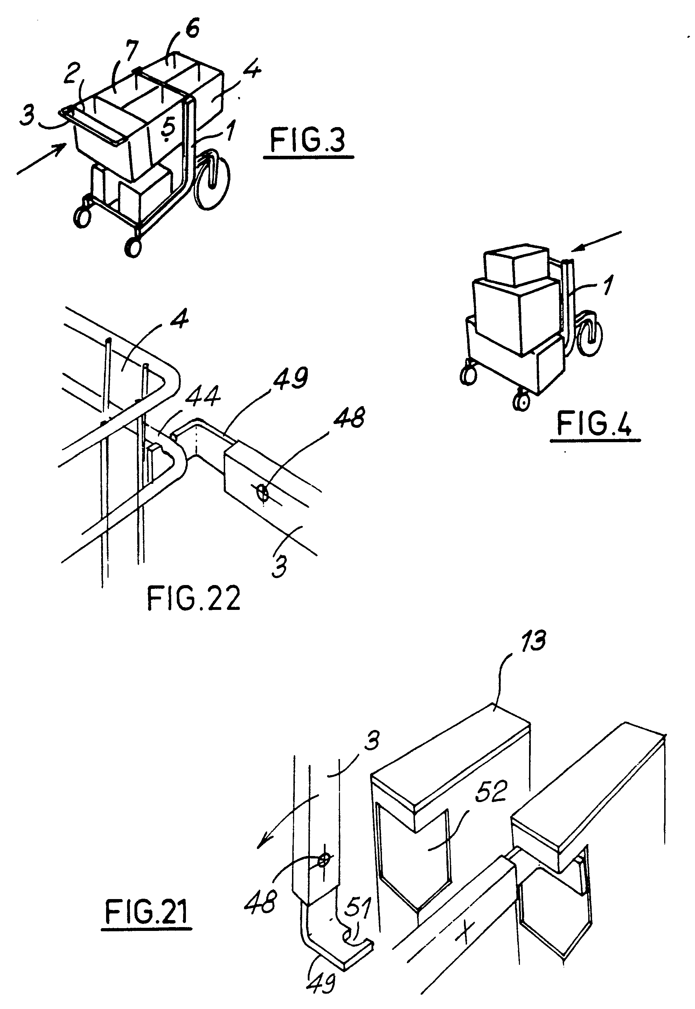

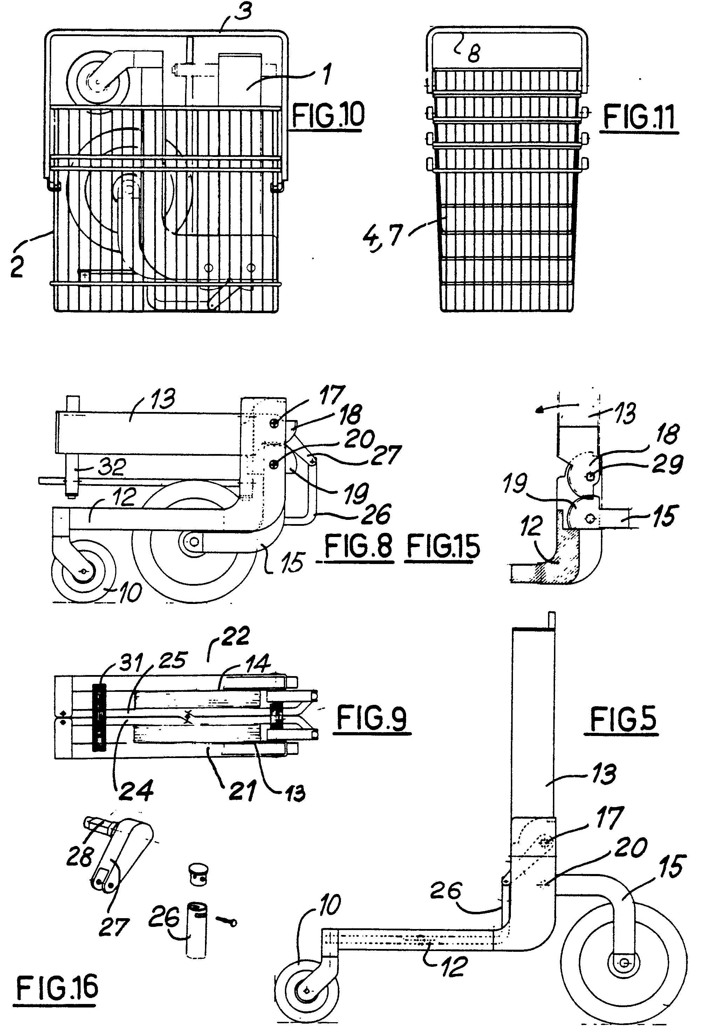

Le dispositif de transport et de manutention selon l'invention qui est représenté sur les figures 1 à 4 dans différentes possibilités d'utilisation est constitué, d'une part, d'un chariot repliable 1 qui est représenté à la figure 5 et, d'autre part, d'au moins un panier, tel que le panier principal 2 représenté à la figure 6. Ce panier peut être fixé sur le chariot comme cela est représenté à la figure 7 de manière à constituer un organe de préhension et de manoeuvre dudit chariot. Dans ce cas, ce panier principal 2 qui est de forme générale parallélépipédique est fixé transversalement sur le chariot et l'anse 3 du panier principal sert de panier pour la manipulation du chariot.

Le chariot peut être replié comme représenté sur les figures 8 et 9 et lorsqu'il est replié, ses dimensions extérieures hors tout sont légèrement inférieures aux dimensions intérieures du panier principal 2 de telle sorte que le chariot 2, lorsqu'il est replié peut être logé dans le panier principal 2 comme cela est représenté sur la figure 10.

Pour l'utilisation de produits en vrac, en particulier pour le transport des achats effectués dans un magasin à grande surface, le dispositif selon l'invention comporte des paniers supplémentaires 4 à 7 qui peuvent également se fixer sur le chariot 1 lorsque ce dernier est en position d'utilisation c'est-à-dire en position dépliée; ces paniers supplémentaires sont gerbables entre eux comme on peut le voir sur la figure 11 de telle sorte que l'ensemble du dispositif selon l'invention peut être réduit à deux paniers, d'une part le panier principal 1 qui contient le chariot à l'état replié et, d'autre part, l'ensemble des quatre paniers 4 à 7 qui sont gerbés et solidarisés entre eux; ces deux ensembles représentés aux figures 10 et 11 peuvent être facilement transportés par une seule personne.

Les différents paniers sont munis d'anses, une anse 3 pour le panier principal et une anse 8 pour les paniers secondaires, qui est articulée sur le panier entre une position verticale de transport et une position horizontale dans laquelle ladite anse 3 ou 8 réalise un verrouillage du panier sur le chariot 1.

Comme on peut le voir en particulier sur les figures 1 à 3, les paniers supplémentaires 4 à 7 sont de forme rectangulaire et ils sont fixés deux à deux sur le chariot en étant adjacents par une de leur longueur et sont disposés longitudinalement dans le sens de déplacement du chariot. Dans la position d'utilisation représentée sur les figures 1 à 3, les anses 8 des paniers 4 à 7 sont rabattues vers l'extérieur et elles comportent au moins à leur partie supérieure un dispositif de protection contre les chocs tel qu'un revêtement plastique 9; l'anse du panier principal 1 est également munie d'un tel revêtement 11.

Comme on peut le voir sur les figures 1 et 12, dans le cas où l'on utilise les paniers supplémentaires, le panier principal 2 est fixé transversalement sur les petits côtés des paniers supplémentaires 4 et 5 et non sur le chariot directement, l'anse 3 effectuant toujours le verrouillage du panier principal 2 sur les paniers supplémentaires 4 et 5. De cette manière, on obtient un chariot comportant cinq paniers, ce qui représente un volume important pour l'utilisation dans les magasins à grande surface; le chariot 1 peut également comporter un plateau à sa partie inférieure sur lequel on peut également déposer des objets comme cela est représenté sur les figures 1 et 2.

Les figures 13 à 15 illustrent un mode de réalisation du chariot 1. Dans ce mode de réalisation, ce dernier est constitué d'une embase 12 munie de roues 10 qui constituent les roues arrière dans le cas de l'utilisation dans un magasin à grande surface tel que représenté sur les figures 1, 3 et 12, de deux montants latéraux verticaux 13 et 14 qui sont montés à articulation sur ladite embase, et de deux supports de roues avant 15 et 16 qui sont également articulés sur l'embase 12. Les montants latéraux 13 et 14 sont articulés autour d'un axe horizontal transversal 17 et les supports de roues 15 et 16 sont articulés autour d'un axe 20 parallèle à l'axe 16.

Conformément à l'invention, de chaque côté de l'embase 12, le montant latéral vertical et le support de roues sont reliés entre eux de manière à pivoter de manière antagoniste c'est-à-dire en sens inverse sur l'embase 12. Dans le mode de réalisation représenté, ce pivotement antagoniste est obtenu au moyen de deux roues dentées 18 et 19 solidaires respectivement du montant latéral vertical et du support de roues et qui s'engrènent l'une dans l'autre. De cette manière, lorsque le montant vertical pivote vers le bas et vers l'embase, c'est-à-dire vers la gauche dans le cas de la figure 5 le support de roues associé pivote en sens inverse de manière à venir se loger en dessous de l'embase 2. Grâce à cette disposition, on obtient un encombrement réduit en longueur du chariot à l'état replié puisque sa longueur correspond pratiquement à la longueur de l'embase 12.

Ce pivotement antagoniste pourrait être obtenu par tous moyens équivalents, par exemple à l'aide d'un jeu de bielles reliant le montant latéral vertical au support de roues.

Comme on peut le voir en particulier sur les figures 13 et 14, l'embase 12 comporte essentiellement deux montants horizontaux latéraux 21 et 22 qui portent une roulette orientable 10 à une de leurs extrémités et dont l'autre extrémité est coudée de manière à constituer un élément en forme de L et supporte les axes d'articulation 17 et 20. Sur ces deux montants horizontaux 21 et 22 sont montés à articulation autour d'un axe vertical deux éléments diagonaux 24 et 25 qui sont articulés l'un sur l'autre en leur milieu; Ces éléments diagonaux 24 et 25 sont fixés à articulation sur l'extrémité arrière de chacun des montant 21 et 22, c'est-à-dire l'extrémité qui porte les roulettes 10 et à leur autre extrémité, ces éléments diagonaux sont reliés aux montants verticaux 13 et 14 de manière à être entraînés vers l'avant, c'est-à-dire vers les supports de roues 15 et 16 lorsque lesdits montants verticaux 13 et 14 sont baissés en vue du pliage du chariot. Dans le mode de réalisation représenté cette liaison est obtenue par le fait que chaque élément diagonal 24 ou 25 comporte à son extrémité avant une partie coudée vers le haut 26 qui est fixée à rotation autour d'un axe horizontal sur une biellette 27 qui est solidaire du montant vertical 13 ou 14. Dans l'exemple représenté, cette biellette 27 porte un axe horizontal 28 à section carré qui s'engage dans un trou central également de section carrée 29 de la roue dentée 18 qui est solidaire du montant latéral vertical 13 ou 14. Cette articulation est représentée vue en éclaté sur la figure 16 où on a représenté simplement l'extrémité de la partie coudée 26 de l'élément diagonal 24 ou 25.

Les éléments diagonaux 24 et 25 portent avantageusement des bandes souples 31 disposées transversalement fixées chacune par leurs extrémités aux deux éléments diagonaux 24 et 25; de cette manière, on réalise une sorte de plancher qui permet de supporter des paquets volumineux comme cela est représenté par exemple sur les figures 1 à 4.

Les deux montants latéraux verticaux 13 et 14 sont réunis par deux montants horizontaux transversaux 32 et 33 formés chacun de deux demi-montants symétriques, et disposés sensiblement aux deux extrémités des montants verticaux 13 et 14; chacun de ces montants horizontaux est monté à articulation à ses extrémités extérieures autour d'un axe vertical 101 sur une chape 103 solidaire du montant vertical 13 ou 14 correspondant, et comporte une articulation centrale à genouillère qui lui permet de s'ouvrir vers l'arrière, c'est-à-dire en direction des roulettes 10.

Le chariot est avantageusement verrouillé en position dépliée, c'est-à-dire en position d'utilisation, au moyen d'un dispositif de verrouillage bloquant les deux montants horizontaux 32 et 33 lorsqu'ils sont en position dépliée extrême, c'est-à-dire lorsque leurs demi-montants sont dans le prolongement l'un de l'autre, et qu'ils s'étendent alors dans un même plan unique. A ce moment, on a également simultanément réalisé le verrouillage des montants 13 et 14 en position verticale dépliée, en les maintenant donc dans le même plan vertical que les montants horizontaux 32 et 33 dépliés. Ceci est obtenu par le fait que d'une part les extrémités extérieures de chacun des deux demi-montants de la traverse horizontale 33 viennent en butée contre une entaille 102 pratiquée dans la partie supérieure arrière de l'embase 12, et que d'autre part les extrémités centrales desdits demi-montants des deux traverses 32 et 33 sont munies d'un mécanisme complémentaire de verrouillage.

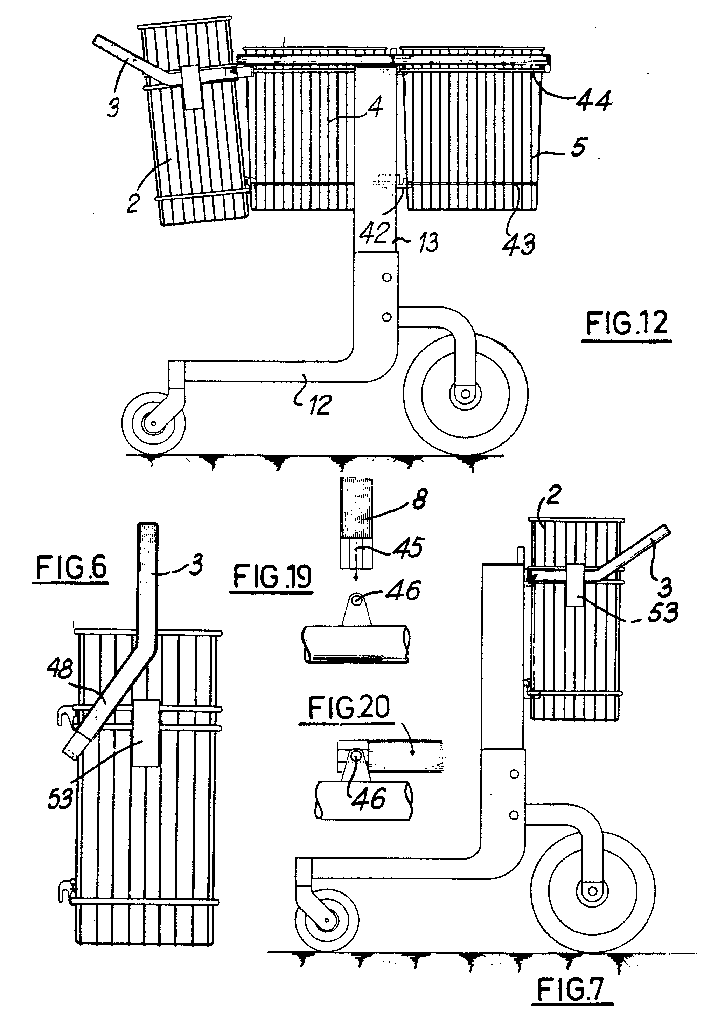

Comme on peut le voir sur les figures 14 d'une part et 16 et 18 d'autre part qui représentent des vues de détail représentant l'articulation du montant horizontal inférieur 33 sur le montant vertical 13 et ledit dispositif de verrouillage en position d'utilisation, les deux montants horizontaux 32 et 33 sont reliés par un montant vertical 35 sur lequel ils sont fixés à articulation autour d'un axe vertical comme on peut le voir sur la figure 18; ce montant vertical 35 est creux et comporte une partie coulissante 36 portant à son extrémité supérieure une poignée 37. Cette partie coulissante 35 est maintenue en position basse au moyen d'un ressort 38; les extrémités intérieures des deux parties des montants horizontaux 32 et 33 comportent deux éléments profilés 39 qui viennent se bloquer derrière une pièce 41 solidaire de la partie inférieure du montant vertical 35. Comme on peut le voir sur la figure 18, lors du déploiement du chariot, l'élément profilé 39 pousse la butée 41 vers le haut et vient s'engager derrière elle lorsque celle-ci revient en position basse et il y a donc auto-verrouillage du chariot.

Pour replier le chariot, il suffit de soulever la poignée 37 ce qui soulève le montant 35 et par suite la butée 41 qui dégage les éléments profilés 39 et l'on peut alors pousser l'ensemble des montants verticaux 13 et 14 et des montants horizontaux 32 et 33 vers l'arrière; ce mouvement entraîne le pivotement antagoniste des supports de roues 15 et 16 ainsi que l'entraînement vers l'arrière des extrémités des éléments diagonaux 24 et 25, ce qui referme le chariot en rapprochant les deux parties latérales de l'embase 12 de manière à obtenir le chariot replié tel que représenté à la figure 8.

Comme indiqué précédemment, les anses 8 des paniers supplémentaires 4 à 7 servent à leur verrouillage sur le chariot lorsqu'elles sont mises en position horizontale. Comme on peut le voir sur les figures en particulier sur la figure 12, les paniers supplémentaires 4 à 7 sont accrochés sur les montant horizontaux 32 et 33 au moyen de crochets 42 solidaires de ces montants et s'engageant dans des cadres horizontaux 43 et 44 du panier.

En vue du verrouillage des paniers sur le chariot, chaque anse 8 des paniers 4 à 7 comporte à chacune de ses extrémités, au-delà de son axe d'articulation sur le panier un évidement longitudinal 45 central comme on peut le voir sur les figures 19 et 20, cet évidement vient se placer sur un téton 46 solidaire du montant horizontal supérieur 32 et lorsque l'anse 8 est rabattue (voir figure 20) le téton 46 est bloqué dans l'évidement 45 qui a tourné d'un quart de tour et le panier est verrouillé sur le montant horizontal supérieur 32.

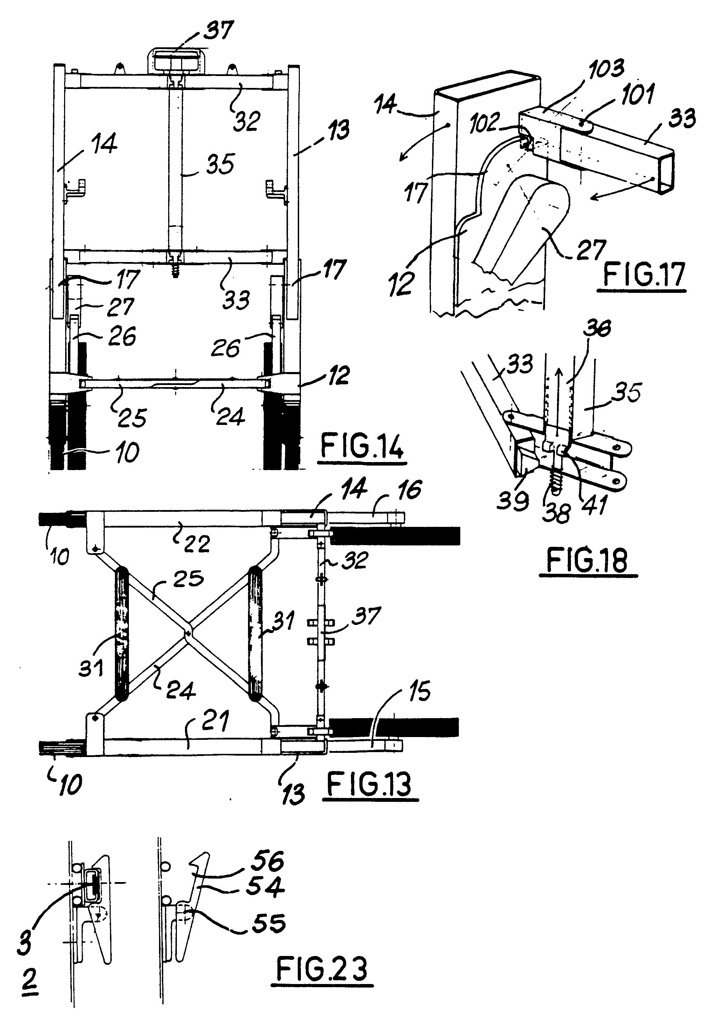

Comme on peut le voir en particulier sur la figure 6, l'anse 3 du panier principal 2 présente en profil une forme légèrement coudée en deux parties égales et est articulée autour d'un axe horizontal 48 qui est excentré par rapport à l'axe transversal du panier. Comme les anses des paniers supplémentaires 4 à 7, l'anse 3 comporte une partie disposée au-delà de l'axe d'articulation 48 et cette partie en saillie comporte une partie recourbée comme on peut le voir en particulier sur les figures 21 et 22. Cette partie recourbée 49 comporte une encoche 51. Cette partie recourbée 49 sert au verrouillage du panier 2 sur le chariot 1 lorsqu'il est fixé directement sur le chariot comme représenté sur la figure 7; dans ce cas, la partie recourbée 49 vient s'engager dans une encoche 52 aménagée dans la partie supérieure du montant vertical 13 ou 14 (voir figure 21) Lorsque le panier principal 2 est fixé sur les paniers supplémentaires 4 et 5, comme représenté par exemple sur la figure 12, l'encoche 51 aménagée dans la partie recourbée 49 vient s'engager dans le cadre horizontal supérieur 44 des paniers 4 et 5 ce qui assure également le verrouillage du panier 2 lorsque son anse 3 est rabattue de manière à constituer une poignée de manoeuvre.

Pour assurer le verrouillage, le panier principal 2 comporte de chaque côté un dispositif 53 de blocage de l'anse 8 en position horizontale comme représenté par exemple sur la figure 7.

Ce dispositif de blocage est représenté en vue de profil sur la figure 23 en position bloquée et en position de déblocage. Il est essentiellement constitué d'un levier 54 articulé autour d'un axe horizontal 55 disposé à l'extérieur du panier. Ce levier comporte un évidement 56 dans lequel vient se loger la partie latérale de l'anse 3 lorsqu'elle est dans la position horizontale représentée à la figure 7 et ce levier est soumis à l'action d'un ressort tendant à le ramener vers le panier 2 de manière à bloquer l'anse 3.

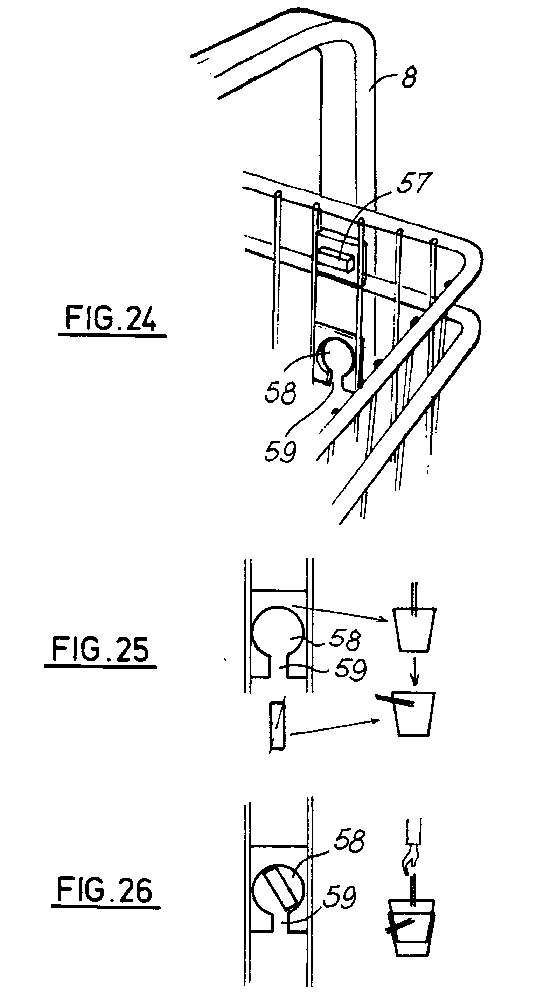

Conformément à l'invention, les paniers supplémentaires 4 à 7 sont gerbables l'un dans l'autre et ils peuvent être verrouillés entre eux lorsqu'ils sont gerbés de manière à constituer un ensemble qui peut être manipulé à l'aide du panier supérieur comme représenté à la figure 11. Les figures 24 à 26 illustrent un mode de réalisation du dispositif de verrouillage des paniers supplémentaires entre eux. Comme on peut le voir sur la figure 24, chaque partie latérale de l'anse d'un panier comporte au niveau de son axe d'articulation un ergot allongé 57 et la partie supérieure du panier comporte un évidement circulaire 58 dont le diamètre correspond à la longueur de l'ergot 57. Cet évidement circulaire 58 se termine par une fente 59 dont la largeur correspond à la largeur de l'ergot 57. L'orientation de l'ergot 57 est telle que lorsque l'anse se trouve en position basse, cet ergot est légèrement incliné par rapport à la verticale.

Le verrouillage d'un panier sur le panier dans lequel il vient s'engager s'effectue de la manière suivante comme représenté aux figures 25 et 26; le panier inférieur a son anse en position basse et cette anse est relevée de manière que l'ergot 57 vienne en position verticale; la partie en saillie de l'anse du panier supérieur peut alors s'engager par la fente 59 de manière que l'ergot 57 du panier inférieur pénètre dans l'évidement circulaire 58 du panier supérieur. Ensuite, l'anse du panier inférieur est relâchée et on obtient la position représentée à la figure 26 dans laquelle l'ergot ne peut plus se dégager par la fente 59 ce qui solidarise donc les deux paniers.

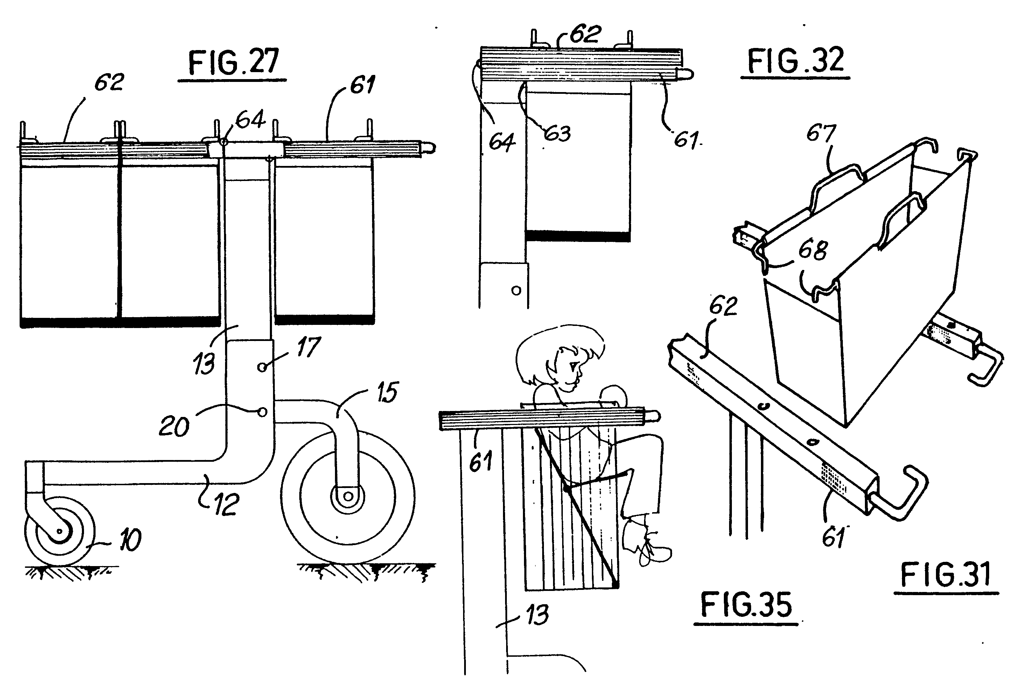

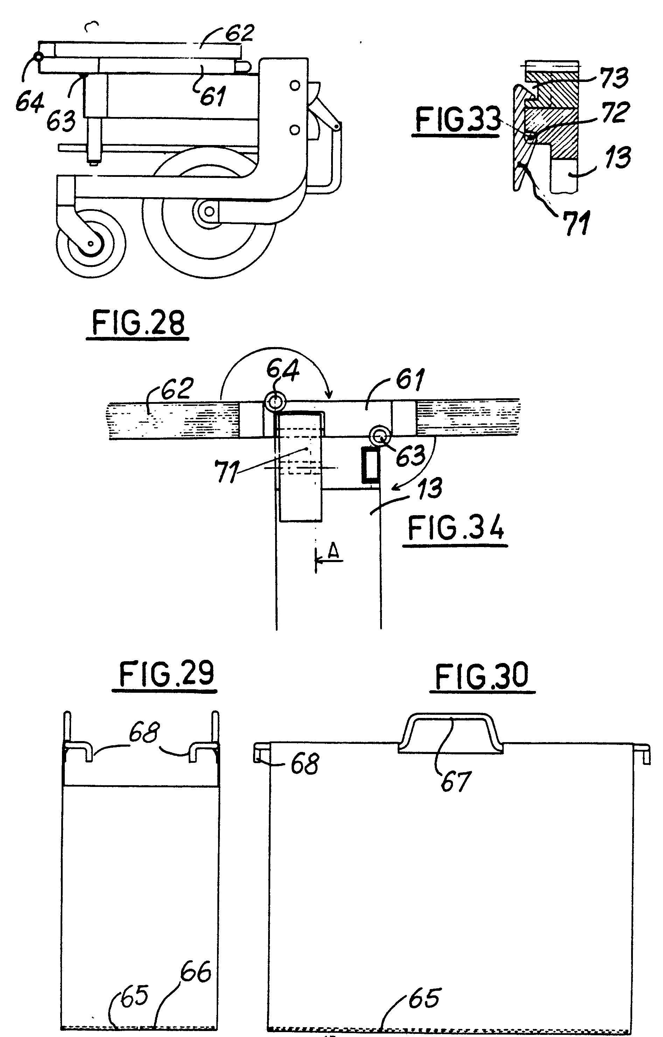

Les figures 27 à 35 représentent une variante de réalisation de l'invention dans laquelle les paniers sont réalisés en matière souple telle qu'une matière plastique. Dans cette variante, le chariot 1 est le même mais il comporte des montants latéraux destinés à la fixation des paniers en matière souple. Le chariot 1 comporte deux montants latéraux de chaque côté, un montant inférieur 61 et un montant supérieur 62. Le montant inférieur 61 est fixé à articulation autour d'un axe horizontal 63 transversal sur le montant vertical latéral 13 ou 14; cette articulation 63 est disposée sur le bord arrière du montant 13 ou 14 et sa position sur le montant 61 est telle que lorsque ce montant est en position d'utilisation comme représenté sur la figure 27 il vient en appui sur le dessus du montant vertical 13 par sa partie avant, sa partie arrière s'étendant vers l'arrière du chariot. Le montant supérieur 62 est articulé autour d'un axe horizontal tranversal 64 sur l'extrémité avant du montant inférieur 61 de manière à constituer avec celui-ci une articulation à genouillère telle que, en position d'utilisation représenté sur la figure 27 les deux montants se trouvent en alignement et en appui sur le dessus du montant vertical 13. En position repliée, représenté sur la figure 28, le montant supérieur est pivoté pour venir sur le montant inférieur et l'ensemble des deux montants pivotent autour de l'axe 63 de telle manière que les deux montants viennent reposer sur le montant vertical 13 ou 14, ce qui réduit très fortement l'augmentation de hauteur dûe à la présence de .ces deux montants comme on peut le voir sur la figure 28.

Comme on peut le voir sur les figures 29 et 30, les paniers sont constitués d'une enveloppe parallélépipédique souple comportant un fond rigide 65 qui est articulé sur un axe longitudinal médian 66 de manière à pouvoir replier les paniers lorsqu'ils ne sont pas utilisés. Chaque panier comporte sur chaque côté latéral une anse 67 qui comporte de chaque côté du panier des parties en saillie présentant des dispositifs d'accrochage telles que des parties coudées 68 qui viennent s'engager dans des trous correspondant des bras supérieur et inférieur 61 et 62, ce qui assure la fixation des paniers sur le chariot, comme on peut le voir sur la figure 31.

Comme on peut le voir sur la figure 32 on peut également ne placer qu'un seul panier sur le chariot; dans ce cas le montant supérieur 62 est rabattu sur le montant inférieur 61 de manière à libérer complètement l'espace au-dessus du plateau de chargement constitué par les éléments diagonaux 24 et 25 et les bandes 31.

Les figures 33 et 34 représentent un mode de réalisation du système de verrouillage du montant inférieur 61 sur le montant vertical 13 ou 14 en position d'utilisation. Ce système de verrouillage comporte essentiellement un crochet 71 articulé autour d'un axe horizontal longitudinal 72 sur le montant vertical 13 ou 14; ce crochet est soumis à l'action d'un ressort tendant à le ramener vers le montant 13 et coopère avec un évidement 73 aménagé latéralement dans le montant inférieur 61.

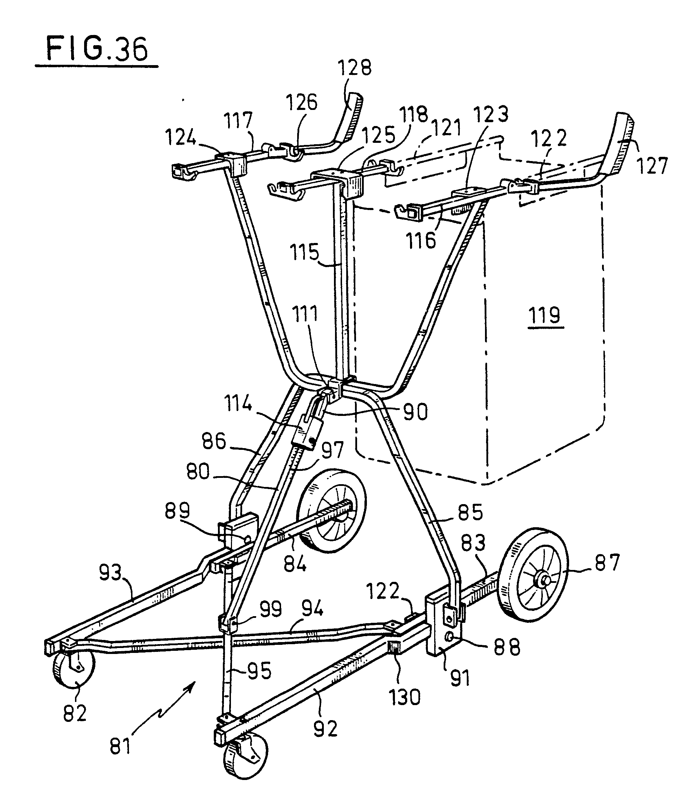

Dans les deux modes de réalisation, le panier principal peut être conformé de manière à réaliser un porte-bébé, comme représenté sur les figures 1 et 35. On voit que l'invention permet de réaliser un appareil qui peut se ranger sous un faible volume, et qui peut être facilement transporté par une seule personne les paniers de chargement sont disposés à une hauteur suffisamment grande pour que les utilisateurs n'aient pas à se baisser pour les charger ou les décharger. Le maniement de ces dispositifs de transport est particulièrement simple en particulier, ils sont faciles à replier ou à mettre en position d'utilisation.

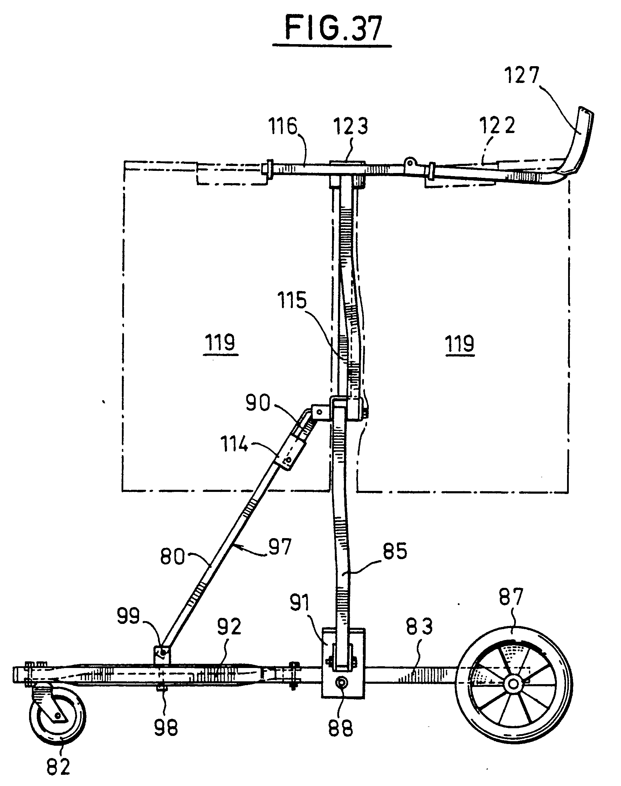

Le chariot repliable que l'on voit sur les figures 36 et 37 est constitué de trois parties principales, tout d'abord une embase 81 sur laquelle sont fixées à articulation des roues avant 82, deux supports de roues arrière 83 et 84 et deux montants latéraux 85 et 86.

Les supports de roues arrière 83 et 84 supportent chacun une roue 87 et ils sont articulés à rotation selon un axe horizontal 88 sur l'embase 81; les montants latéraux 85 et 86 sont également articulés autour d'un axe horizontal 89 sur l'embase 81. Ces axes d'articulation 88 et 89 sont disposés à l'extrémité arrière de l'embase 81 et, de chaque côté de l'embase, le support de roue arrière et le montant latéral sont articulés l'un sur l'autre de façon à pivoter de manière antagoniste. Ceci est réalisé par exemple au moyen de deux pignons solidaires chacun de l'axe de rotation de chacun de ses éléments et s'engrenant l'un dans l'autre; ces pignons sont logés dans un boîtier 91 porté par l'extrémité arrière de l'embase 81.

Conformément à la présente invention, la vitesse de rotation des deux supports de roues arrière 83 et 84 par rapport à l'embase est le double de la vitesse de rotation des montants latéraux 85 et 86 par rapport à cette même embase. Grâce à cette disposition, les supports de roues arrière peuvent tourner d'un demi-tour alors que les montants latéraux tournent d'un quart de tour lors du mouvement de repliage. De cette manière, on peut placer les supports de roues arrière 83 et 84 dans le prolongement de l'embase lorsque le chariot est à l'état déplié d'utilisation; ceci permet d'augmenter notablement l'assise du chariot; ce qui est particulièrement important compte-tenu de la charge qu'il peut supporter alors qu'il doit pouvoir être manipulé par une personne inexpérimentée.

L'embase 81 est constituée de deux barres horizontales parallèles 92 et 93 et elles sont reliées entre elles au moyen de deux bras diagonaux 94 et 95 articulés l'un sur l'autre en leur milieu 98 et dont une extrémité est articulée selon un axe vertical sur l'extrémité avant de chaque barre horizontale et dans l'autre extrémité est fixée à rotation toujours selon un axe à rotation sur le support de roues correspondant 83 ou 84.

Conformément à la présente invention, les deux montants latéraux 85 et 86 se croisent de manière à présenter la forme d'un X et ils sont ainsi articulés l'un sur l'autre en leur point de croisement 96.

Selon l'invention on prévoit un dispositif de verrouillage maintenant les montants latéraux sur l'embase en position d'utilisation; les montants sont maintenus en position verticale et on obtient un ensemble rigide. Avantageusement, le dispositif de verrouillage est constitué par au moins une jambe de force montée à articulation entre l'embase et au moins un montant latéral. Dans l'exemple représenté, une jambe de force 97 est montée à articulation entre les deux axes d'articulation 96 et 98 des éléments diagonaux et des montants latéraux. Comme on peut le voir sur les figures, la jambe de force est en fait constituée de deux éléments alignés en position dépliée 80 et 90 alignés en position d'utilisation.

Grace à la disposition de cette jambe de force et à la forme des montants latéraux, on réalise un ensemble particulièrement rigide du fait qu'il est triangulé et, par conséquent, on obtient un chariot particulièrement stable, comme indiqué plus haut et qui peut supporter des charges élevée.

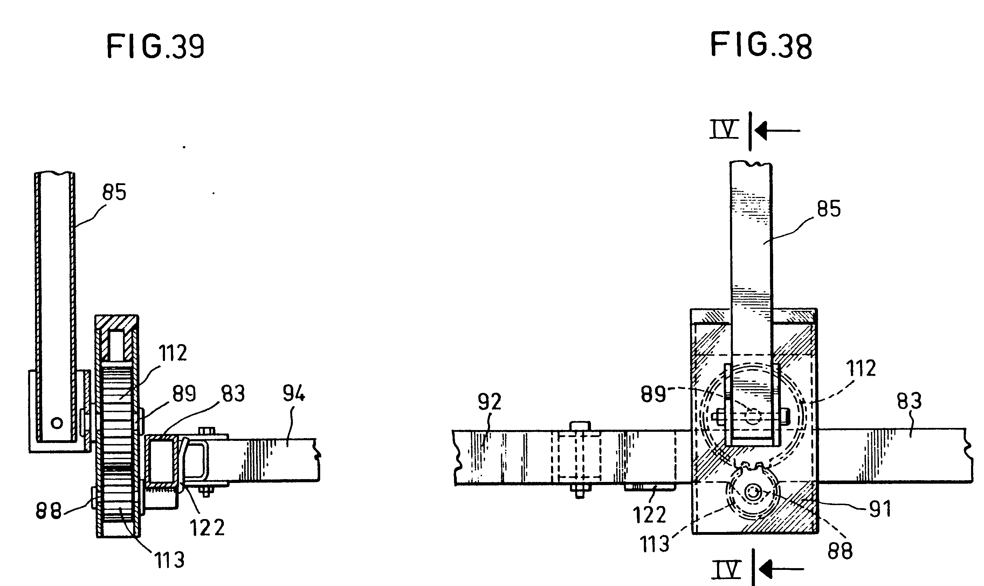

La figure 38 est une vue de détail montrant l'articulation des supports de roues et du montant latéraux sur l'embase et la figure 39 est une coupe selon la ligne IV - IV de la figure 38. On voit en particulier la boîte 91 solidaire d'une des barres 92 et 93 et l'embase 81 et qui contient le dispositif d'articulation du support de roue arrière par rapport au montant latéral. La rotation double indiquée plus haut est obtenue dans l'exemple décrit au moyen de deux roues dentées 112 et 113 qui sont respectivement solidaires du montant latéral et du support de roue arrière; elles sont logées dans le boîtier 91 et pour obtenir une rotation double, la roue dentée 112 solidaire du montant à un nombre de dents double de la roue dentée 113 solidaire du support de roue.

Une barre verticale 115 est montée à articulation sur l'axe d'articulation 96 des montants latéraux 85 et 86 et elle est solidaire de la jambe de force 97. De cette façon, cette barre reste toujours verticale à équidistance des parties supérieures des deux montants latéraux.

Pour la fixation de paniers amovibles, les montants latéraux 83 et 84 et la barre verticale 115 qui vient d'être décrite comportent à leur extrémité supérieure des supports horizontaux de paniers 116, 117, et 118 qui s'étendent de part et d'autre de l'extrémité supérieure des montants latéraux et de ladite barre verticale. Comme on peut le voir sur la figure 36, on peut fixer sur ces supports des paniers qui sont constitués d'une enveloppe 119 parallélépipédique en matière souple telle que la matière synthétique et de deux anses horizontales 121 et 122 constituées par une barre s'engageant sur l'extrémité supérieure de deux bords opposés de l'enveloppe 119; une encoche centrale 123 est aménagée dans chacune des parois supportant les anses 121 et 122 de manière à faciliter la préhension du panier.

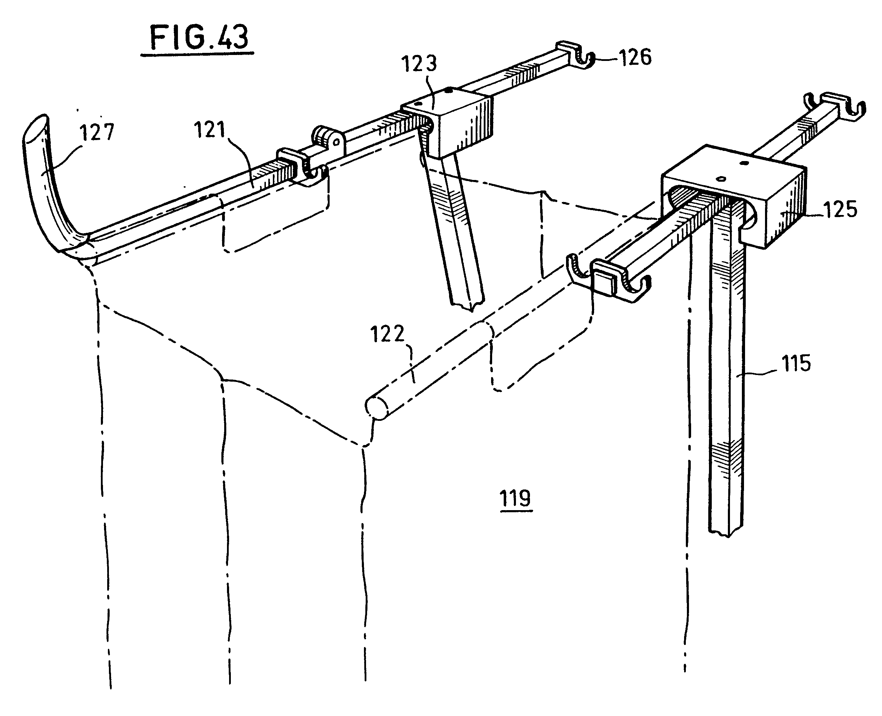

La figure 43 illustre le mode de fixation de ces paniers sur le chariot. Chacune des extrémités supérieures des montants latéraux et du bras vertical sont munies d'une pièce en forme de U renversé 123, 124 et 125 de manière à constituer de part et d'autre de ladite extrémité un logement dans lequel vient s'engager de l'anse horizontale du panier qui est par ailleurs soutenu par un crochet 126 disposé sur le support horizontal de panier. Ces éléments en forme de U 123, 124 et 125 maintiennent une extrémité des anses 121 et 122 horizontalement et verticalement. Comme on peut le voir en particulier sur les figures 36 et 43, les paniers sont cond accrochés en porte-à-faux et ils sont maintenus en place par le fait que leurs fonds qui comportent une plaque rigide s'appuient contre les montants latéraux 85 et 86.

Les supports de panier 116 et 117 comportent avantageusement une poignée repliable 127 et 128; ces poignées sont repliables de manière à limiter l'encombrement du chariot lorsqu'il est replié. Il est également avantageux que les poignées soient dégagées de l'extrémité libre des paniers de manière à permettre un accrochage et un décrochage facile de ces derniers. Ceci peut par exemple être obtenu par le fait que les poignées précitées soient courbées vers l'extérieur du chariot.

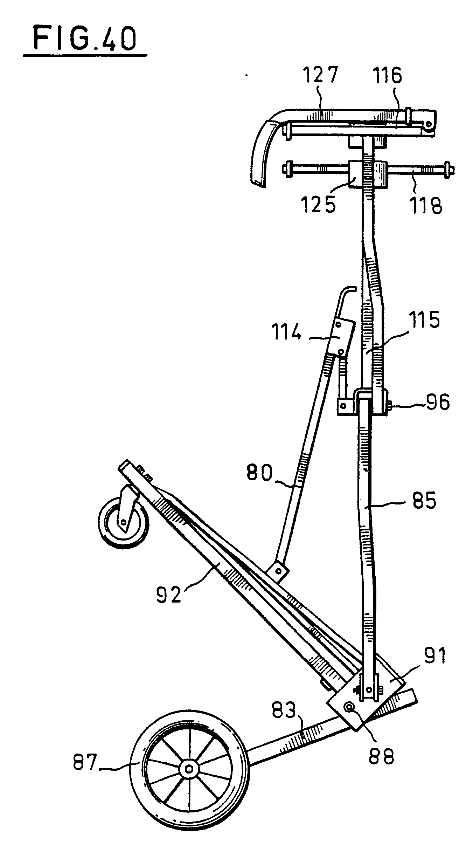

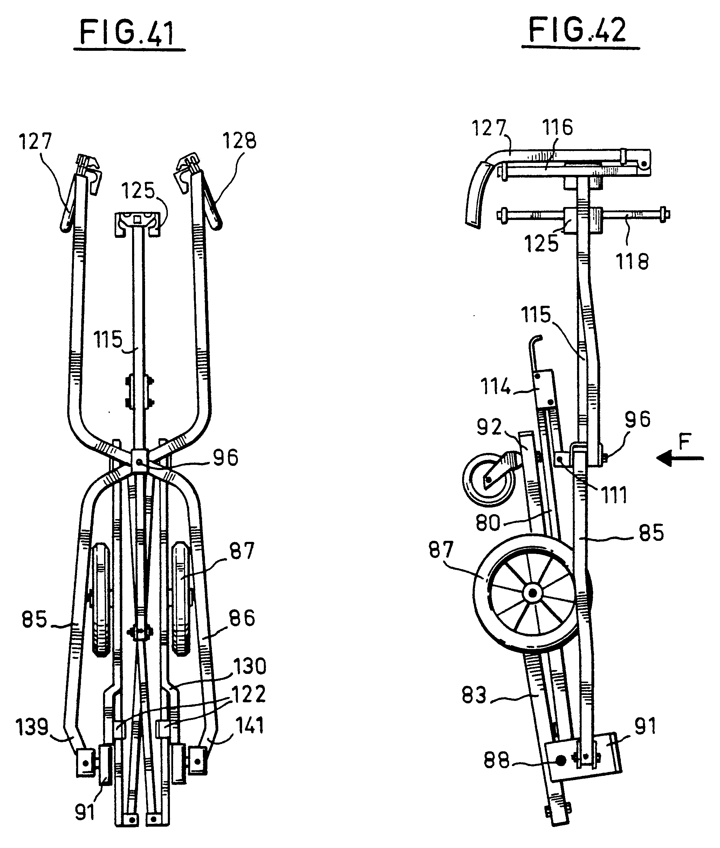

Le pliage du chariot qui vient d'être décrit est illustré en particulier par les figures 40 à 47. Après déblocage du dispositif de verrouillage 114, on agit sur les montants latéraux de manière à les rapprocher l'un de l'autre et à les pancher vers l'avant. Il en résulte une rotation de ces montants latéraux par l'embase, rotation qui entraîne une rotation double des supports de roues qui entraîne l'extrémité des bras diagonaux 94 et 95, ce qui a pour effet de refermer l'embase sur elle-même, les barres horizontales 92 et 93 se rapprochant l'une de l'autre. On voit sur la figure 40 le chariot lorsqu'il est à moitié replié; sur la figure 41, il est représenté toujours de profil lorsqu'il est entièrement replié. Dans cette position, les roues arrière 87 viennent se loger respectivement entre un montant latéral et la barre horizontale correspondante comme on peut le voir en particulier sur la figure 42. A cet effet, les barres horizontales 112 et 113 sont contrecoudées en 130; de même, l'extrémité inférieure des montants latéraux 85 et 86 comportent une partie coudée 129, 131. Dans la position repliée, comme indiqué plus haut, les poignées 127 et 128 sont rabattues sur les supports 116 et 117 et on limite de ce fait la hauteur du chariot lorsqu'il est à l'état replié. Ce chariot lorsqu'il est replié à un encombrement réduit et son poids étant limité il peut être facilement manipulé par exemple pour le mettre dans le coffre d'un véhicule.

Pour augmenter la rigidité du chariot lorsqu'il se trouve en position d'utilisation, une butée 122 faisant saillie vers l'intérieur est prévue sur les barres latérales 92 et 93 de manière à maintenir les supports de roues arrière 83 et 84 alignées avec lesdites barres latérales et à limiter l'amplitude de rotation des supports de roues arrière.

On peut prévoir d'autres dispositifs de verrouillage des éléments latéraux sur l'embase permettant la rigidification du chariot en position d'utilisation.

Par ailleurs, on peut également prévoir deux jambes de force articulées chacune entre une barre horizontale 92 et 93 et un montant latéral 85 et 96.

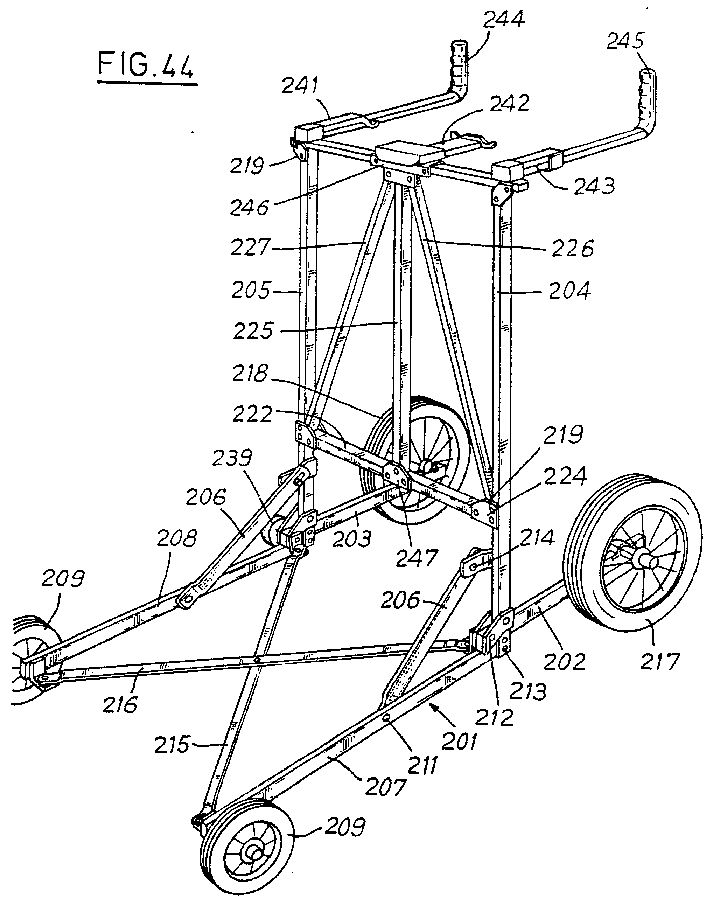

Les Figs. 44 à 46 représentent un autre mode de réalisation du chariot repliable selon l'invention. Ce chariot est également constitué d'une embase 201, de deux supports de roue arrière 202 et 203 et de deux montants latéraux verticaux 204 et 205. Les montants latéraux verticaux et les supports de roue arrière sont articulés sur l'embase 201 de manière à pivoter en sens contraire et l'amplitude de rotation des montants latéraux verticaux est sensiblement la moitié de l'amplitude de rotation des supports de roue arrière.

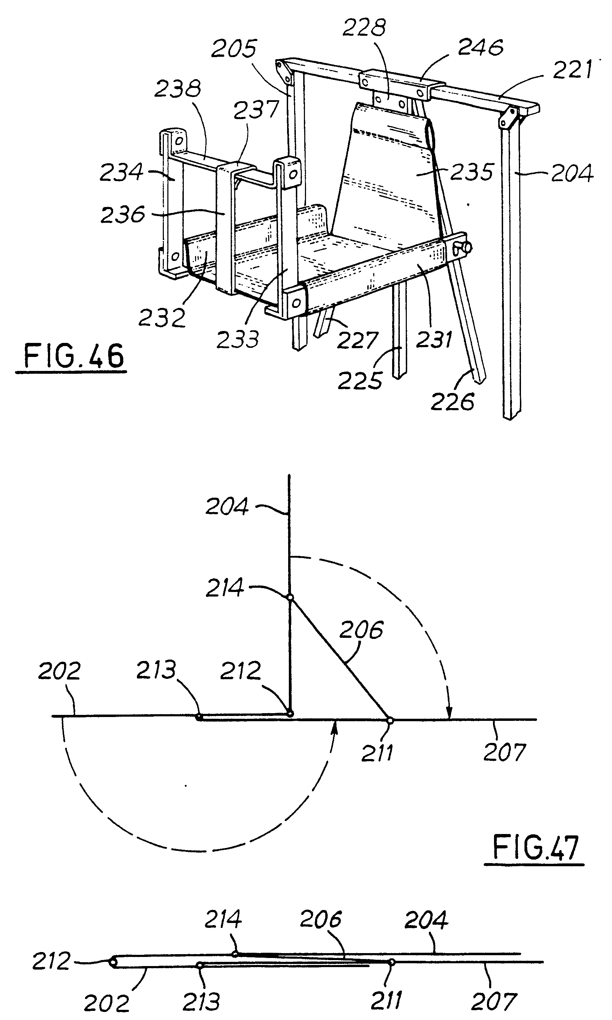

Le dispositif d'articulation des trois éléments précités, l'embase, le support de roue arrière et le montant latéral vertical, de chaque côté du chariot, est représenté schématiquement sur la figure 47 sur laquelle on voit au-dessus la position de ces éléments en position dépliée et au-dessous la position des mêmes éléments en position repliée.

Conformément à l'invention, le support de roue arrière 203 est articulé directement d'une part sur l'embase 201 autour d'un axe d'articulation horizontal transversal 213 et, d'autre part, sur le montant latéral vertical 204 autour d'un axe horizontal transversal 212; par contre, l'articulation entre le montant latéral vertical 204 et l'embase 201 est réalisée au moyen d'une biellette 206 articulée à ces deux extrémités sur l'embase 201 d'une part autour d'un axe horizontal transversal 211 et sur le montant latéral vertical 204 autour d'un axe horizontal transversal 214. Conformément à l'invention, l'axe d'articulation 211 de la biellette sur l'embase, l'axe d'articulation 212 du support de roue arrière sur le montant latéral vertical et l'axe d'articulation 213 du support de roue arrière sur l'embase sont sensiblement alignés dans cet ordre lorsque le dispositif est déplié comme on peut le voir sur la figure 47. Ce dispositif d'articulation permet d'obtenir la rotation antagoniste du montant latéral vertical et du support de roue arrière de telle manière que, en position repliée, l'embase, les supports de roue arrière et les montants latéraux verticaux soient disposés sensiblement parallèlement les uns à côté des autres comme on peut le voir sur la partie inférieure de la figure 47. On peut voir en particulier que les axes 211 et 213 restent fixes et que l'axe de pivotement 212 vient se placer en arrière de l'axe de pivotement 213.

Dans le mode de réalisation des figures 44 à 46, l'embase est essentiellement constituée de deux montants horizontaux latéraux 207 et 208 qui sont disposés longitudinalement et sur lesquels sont montés à articulation autour d'un axe vertical les deux éléments diagonaux 215 et 216 qui sont articulés l'un sur l'autre en leur milieu; ces éléments diagonaux sont fixés à articulation sur l'extrémité avant des montants latéraux 207 et 208 de l'embase et, à leur autre extrémité, ces éléments diagonaux sont reliés aux montants latéraux verticaux 204 et 205 de manière à être entraînés vers l'arrière lorsque les montants latéraux verticaux se replient vers l'embase vers la position repliée.

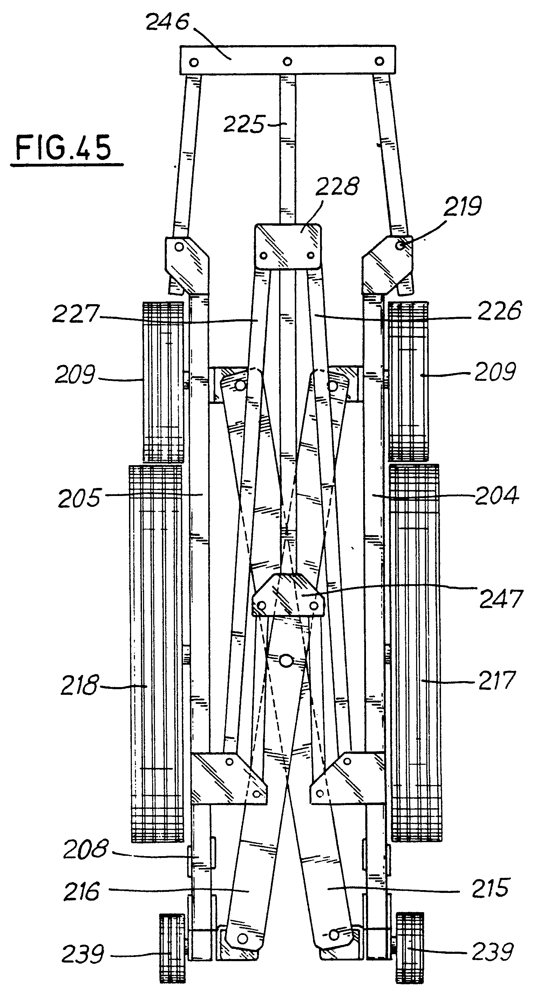

Les montants latéraux verticaux, les montants latéraux 207 et 208 de l'embase et les supports de roue arrière 202 et 203 sont avantageusement réalisés en un tube à section rectangulaire et lorsque le chariot se retrouve en position repliée, telle qu'illustré sur la figure 45, de chaque côté du chariot, les trois tubes 204, 207 et 202 d'une part, 203, 205 et 208 d'autre part, se retrouvent superposés les uns sur les autres dans cet ordre. De cette manière l'encombrement en hauteur du chariot replié est réduit au minimum, cet encombrement étant en fait celui des roues arrières 217 et 218.

Avantageusement, on prévoit un dispositif de verrouillage du chariot en position dépliée, ce dispositif de verrouillage bloquant le dispositif d'articulation qui vient d'être décrit.

Comme on peut le voir en particulier sur la figure 44, les deux montants latéraux verticaux 204 et 205 sont réunis par deux montants horizontaux transversaux 221 et 222 qui sont formés chacun de demi-montants symétriques par articulés par une articulation à genouillère 246 et 247 qui, dans ce mode de réalisation, s'ouvrent vers le haut. Chacun des montants horizontaux transversaux 221 et 222 est monté à articulation à ses extrémités autour d'un axe horizontal 219 sur une chape 223, 224 solidaire du montant latéral vertical 204 ou 205.

Dans ce mode de réalisation, les deux articulations à genouillère sont reliées par un montant central vertical 225 et on prévoit en outre deux traverses obliques 226, 227 qui sont reliées à articulation à leur extrémité inférieure sur le montant latéral vertical par l'intermédiaire de la chape 223 ou 224 et à leur extrémité supérieure sur une pièce 228 qui coulisse sur le montant central vertical 225.

Le chariot représenté sur les figures 44 et 45 peut avantageusement être muni d'un porte-bébé repliable monté à demeure. Il est essentiellement constitué de deux barres horizontales 231, 232 qui sont montées à articulation autour d'un axe horizontal transversal sur une des traverses obliques 226 et 227. Ces barres horizontales supportent à leur autre extrémité un montant vertical 333, 334 articulé sur cette extrémité du montant horizontal 331, 332.

Le porte-bébé comporte également une bande en matière souple 235 qui constitue le dossier et le siège, qui est fixée à une de ses extrémités aux traverses obliques 226, 227 et qui est prolongée à son autre extrémité par une lanière de centrale de retenue 236 dont l'extrémité libre 237 est fixée sur une lanière souple 238 reliant les extrémités libres des deux montants verticaux 233 et 234.

Avantageusement, le dispositif d'articulation, disposé de chaque côté du chariot comporte une petite roulette destinée au transport du chariot lorsqu'il se trouve à l'état replié qui est représenté sur la figure 45.

Pour la fixation de paniers amovibles, les montants latéraux verticaux 204 et 205 et le montant central vertical 225 comportent à leur extrémité supérieure des supports horizontaux de paniers 241, 242 et 243 qui s'étendent de part et d'autre de l'extrémité supérieure des montants latéraux 204 à 205 et du montant central vertical 225. Les supports de paniers 241, 243 qui sont disposés sur les montants latéraux verticaux 204 et 205 comportent avantageusement une poignée repliable 244, 245 qui servent au maniement du chariot lorsqu'il est en position d'utilisation.

## Revendications

1. Dispositif repliable pour le transport et/ou la manutention d'objets ou d'articles en vrac, comportant deux montants latéraux (13, 14, 85, 86, 204, 205) verticaux articulés selon un axe horizontal transversal sur une embase (12, 81, 201) comprenant deux support de roue avant (21, 22, 92, 93, 207, 208) et deux supports de roue arrière (15, 83, 84, 202, 203) également articulés selon un axe horizontal transversal sur ladite embase, caractérisé en ce que, de chaque côté dudit dispositif, le support latéral vertical (13, 14, 85, 86, 204, 205), le support de roue avant (21, 22, 92, 93, 207, 208) et le support de roue arrière (15, 16, 83, 84, 202, 203) sont tous montés à articulation l'un sur l'autre de telle manière, que, lorsque le montant latéral vertical tourne en direction du support de roue avant, le support de roue arrière effectue une rotation antagoniste avec une vitesse de rotation sensiblement double, et en ce que les deux supports de roue avant (21, 22, 92, 93, 207, 208) sont articulés entre eux de manière à venir se placer l'un contre l'autre.

2. Dispositif repliable selon la revendication 1, caractérisé en ce que le support de roue arrière (15, 16, 83, 84, 202, 203) est articulé directement sur l'embase (12, 81, 201) et sur le montant latéral vertical (13, 14, 85, 86, 204, 205) en ce que le montant latéral vertical est articulé sur l'embase par l'intermédiaire d'une biellette (206) et en ce que les axes d'articulation respectifs de la biellette sur l'embase (211), du montant latéral vertical sur le support de roue arrière (212) et du support de roue arrière sur l'embase (213) sont sensiblement alignés dans cet ordre lorsque le dispositif est déplié.

3. Dispositif repliable selon la revendication 1, caractérisé en ce que chaque montant latéral vertical (13, 14, 85, 86) comporte une roue dentée (18) coopérant avec une roue dentée (19) solidaire du support de roue arrière (15, 16) auquel il est relié.

4. Dispositif repliable selon la revendication 2, caractérisé en ce que l'embase (12, 81, 201) comporte deux montants latéraux (21, 22, 92, 93, 207, 208) reliés entre eux par deux éléments diagonaux (24, 25, 94, 95, 215, 216), chaque élément diagonal étant articulé à une de ses extrémités sur un desdits montants latéraux (21, 22, 92, 93, 207, 208) et son autre extrémité étant reliée à articulation avec le montant latéral vertical correspondant (13, 14, 85, 86, 204, 205).

5. Dispositif repliable selon la revendication 1, caractérisé en ce que les deux montants latéraux verticaux (13, 14, 204, 205) sont reliés entre eux par deux montants horizontaux transversaux (32, 33, 221, 222), chaque montant horizontal transversal comportant au milieu une articulation à genouillère 246, 247 les deux articulations à genouillère étant reliées par un montant central vertical (35, 225).

6. Dispositif repliable selon la revendication 5, caractérisé en ce que lesdites articulations à genouillère (246, 247) s'ouvrent vers le haut.

7. Dispositif repliable selon la revendication 5 caractérisé en ce qu'il comporte en outre deux traverses obliques (226, 227) montées chacune à articulation sur le montant latéral vertical (204, 205) au niveau de l'articulation avec le montant horizontal transversal inférieur (222) à une de leurs extrémités et à articulation sur une pièce (228) coulissant sur le montant central vertical (225) à leur autre extrémité.

8. Dispositif selon la revendication 7, caractérisé en ce qu'il comporte un porte-bébé constitué de deux barres horizontales (231, 232) montées à articulation autour d'un axe horizontal transversal sur une traverse oblique (226, 227) à une de leur extrémité et portant à leur autre extrémité un montant vertical articulé (233, 234), d'une bande (235) en matière souple constituant le dossier et le siège, qui est fixée à une de ses extrémités auxdites traverses obliques et qui est prolongée à son autre extrémité par une lanière centrale de retenue (236) dont l'extrémité libre (237) est fixée sur une lanière souple (238) reliant les extrémités libres des deux montants verticaux précités (233, 234).

9. Dispositif repliable selon la revendication 1 caractérisé en ce qu il comporte deux roulettes de transport (239) en position repliée qui sont fixées chacune sur le dispositif d'articulation des montants latéraux verticaux de l'embase et des supports de roue arrière.

10. Dispositif repliable selon la revendication 1, caractérisé en ce qu'il comporte un dispositif de verrouillage (97, 114) bloquant les montants latéraux verticaux (85, 86, 204, 205) en position dépliée d'utilisation.

11. Dispositif repliable selon la revendication 10, caractérisé en ce que le dispositif de verrouillage bloque le dispositif d'articulation des montants latéraux verticaux par rapport à l'embase.

12. Dispositif repliable selon la revendication 1, caractérisé en ce que les montants latéraux (85, 86, 204 205) et ladite barre centrale verticale (115, 225) comportent des supports horizontaux de panier (116, 117, 118, 241 - 243) s'étendant de part et d'autre desdits montants latéraux verticaux et de ladite barre verticale centrale dans le sens de la longueur, lesdits supports étant montés à pivotement sur les montants latéraux verticaux et la barre centrale verticale.

13. Dispositif repliable selon la revendication 12, caractérisé en ce que les supports horizontaux (241, 243) de paniers des montants latéraux verticaux comportent une poignée repliable (127, 128, 244 - 245).


**Patentansprüche**

1. Zusammenklappbare Einrichtung zum Transport und/oder zur Handhabung von Gegenständen oder von Losegut mit zwei seitlichen vertikalen Stützen (13, 14, 85, 86, 204, 205), die entsprechend einer horizontalen Querachse mit einem Basisteil (12, 81, 201) gelenkig verbunden sind, der zwei vordere Radstützen (21, 22, 92, 93, 207, 208) und zwei hintere Radstützen (15, 16, 83, 84, 202, 203) aufweist, die gleichfalls entsprechend einer horizontalen Querachse mit dem Basisteil gelenkig verbunden sind, dadurch gekennzeichnet, daß auf jeder Seite der Einrichtung die seitliche vertikale Stütze (13, 14, 85, 86, 204, 205), die vordere Radstütze (21, 22, 92, 93, 207, 208) und die hintere Radstütze (15, 16, 83, 84, 202, 203) alle so miteinander gelenkig verbunden sind, daß, wenn sich die seitliche vertikale Stütze in Richtung zur vorderen Radstütze verdreht, die hintere Radstütze eine entgegenwirkende Verdrehung mit einer im wesentlichen doppelt so hohen Drehgeschwindigkeit ausführt, und daß die beiden vorderen Radstützen (21, 22, 92, 93, 207, 208) miteinander so gelenkig verbunden sind, daß sie gegeneinander zu liegen kommen.

2. Zusammenklappbare Einrichtung nach Anspruch 1, dadurch gekennzeichnet, daß die hintere Radstütze (15, 16, 83, 84, 202, 203) direkt mit dem Basisteil (12, 81, 201) und mit der seitlichen vertikalen Stütze (13, 14, 85, 86, 204, 205) gelenkig verbunden ist, daß die vertikale seitliche Stütze mit dem Basisteil über einen Gelenkarm (206) gelenkig verbunden ist und daß die jeweiligen Gelenkachsen, über die der Gelenkarm am Basisteil (211), die seitliche vertikale Stütze an der hinteren Radstütze (212) und die hintere Radstütze am Basisteil (213) angelenkt sind, in dieser Reihenfolge im wesentlichen zueinander ausgerichtet sind, wenn die Einrichtung auseinandergeklappt ist.

3. Zusammenklappbare Einrichtung nach Anspruch 1, dadurch gekennzeichnet, daß jede seitliche vertikale Stütze (13, 14, 85, 86) ein Zahnrad (18) aufweist, das mit einem mit der hinteren Radstütze (15, 16), mit der sie verbunden ist, fest verbundenen Zahnrad (19) zusammenwirkt.

4. Zusammenklappbare Einrichtung nach Anspruch 2, dadurch gekennzeichnet, daß der Basisteil (12, 81, 201) zwei seitliche Stützen (21, 22, 92, 93, 207, 208) aufweist, die untereinander durch zwei diagonale Elemente (24, 25, 94, 95, 215, 216) verbunden sind, wobei jedes diagonale Element mit einem seiner Enden an einer der seitlichen Stützen (21, 22, 92, 93, 207, 208) angelenkt und mit seinem anderen Ende mit der entsprechenden seitlichen vertikalen Stütze (13, 14, 85, 86, 204, 205) gelenkig verbunden ist.

5. Zusammenklappbare Einrichtung nach Anspruch 1, dadurch gekennzeichnet, daß die beiden seitlichen vertikalen Stützen (13, 14, 204, 205) untereinander durch zwei horizontale Querstützen (32, 33, 221, 222) verbunden sind, wobei jede horizontale Querstütze in der Mitte ein Kniehebelgelenk (246, 247) aufweist, welche beiden Kniehebelgelenke durch eine zentrale vertikale Stütze (35, 225) miteinander verbunden sind.

6. Zusammenklappbare Einrichtung nach Anspruch 5, dadurch gekennzeichnet, daß die Kniehebelgelenke (246, 247) nach oben klappen.

7. Zusammenklappbare Einrichtung nach Anspruch 5, dadurch gekennzeichnet, daß sie außerdem zwei schräge Streben (226, 227) aufweist, die je mit einem ihrer Enden gelenkig mit der seitlichen vertikalen Stütze (204, 205) in der Höhe der Anlenkung an die untere horizontale Querstütze (222) und mit ihrem anderen Ende gelenkig mit einem auf der zentralen vertikalen Stütze (225) gleitenden Teil (225) verbunden ist.

8. Einrichtung nach Anspruch 7, dadurch gekennzeichnet, daß sie einen Kindersitz aufweist, der aus zwei horizontalen Stangen (231, 232) besteht, die mit ihrem einen Ende um eine horizontale Querachse an einer schrägen Strebe (226, 227) angelenkt sind und an ihrem anderen Ende eine angelenkte vertikale Stütze (233, 234) für ein die Rückenlehne und den Sitz bildendes Band (235) aus biegsamem Material tragen, das mit einem seiner Enden an der schrägen Strebe befestigt ist und an seinem anderen Ende durch einen zentralen Halteriemen (236) verlängert ist, dessen freies Ende (237) an einem biegsamen Riemen (238) befestigt ist, der die freien Enden der beiden vertikalen Stützen (233, 234) miteinander verbindet.

9. Zusammenklappbare Einrichtung nach Anspruch 1, dadurch gekennzeichnet, daß sie zwei Räder (239) zum Transport in der zusammengeklappten Stellung (239) aufweist, die je an der Gelenkeinrichtung der seitlichen vertikalen Stützen des Basisteils und der hinteren Radstützen befestigt ist.

10. Zusammenklappbare Einrichtung nach Anspruch 1, dadurch gekennzeichnet, daß sie eine Verriegelungseinrichtung (97, 114) aufweist, die die seitlichen vertikalen Stützen (85, 86, 204, 205) in ausgeklappter Gebrauchsstellung blockiert.

11. Zusammenklappbare Einrichtung nach Anspruch 10, dadurch gekennzeichnet, daß die Verriegelungseinrichtung die Einrichtung zur Anlenkung der seitlichen vertikalen Stützen relativ zum Basisteil blockiert.

12. Zusammenklappbare Einrichtung nach Anspruch 11, dadurch gekennzeichnet, daß die seitlichen Stützen (85, 86, 204, 205) und die zentrale vertikale Stange (115, 225) horizontale Korbstützen (116, 117, 118, 241 - 243) tragen, die sich in Längsrichtung beidseits der seitlichen vertikalen Stützen und der vertikalen zentralen Stange erstrecken, wobei die Stützen schwenkbar an den seitlichen vertikalen Stützen und der zentralen vertikalen Stange befestigt sind.

13. Zusammenklappbare Einrichtung nach Anspruch 12, dadurch gekennzeichnet, daß die horizontalen Korbstützen (241, 243) der seitlichen vertikalen Stützen einen umklappbaren Handgriff (127, 128, 244 - 245) aufweisen.

## Claims

1. Foldable device for the transport and/or the handling of objects or of articles in bulk, comprising two lateral vertical bars (13, 14, 85, 86, 204, 205) articulated about a horizontal transverse axis on a base (12, 81, 201) comprising two front wheel supports (21, 22, 92, 93, 207, 208) and two rear wheel supports (15, 83, 84, 202, 203) likewise articulated along a horizontal transverse axis on the said base, characterized in that on each side of the said device, the lateral vertical support (13, 14, 85, 86, 204, 205), the front wheel support (21, 22, 92, 93, 207, 208) and the rear wheel support (15, 16, 83, 84, 202, 203) are all mounted articulatedly upon one another in such manner that when the lateral vertical bar turns in the direction of the front wheel support, the rear wheel support performs a contrary rotation at substantially double the rotation speed, and in that the two front wheel supports (21, 22, 92, 93, 207, 208) are articulated in relation to one another in such manner that they come into place one against the other.

2. Foldable device according to claim 1, characterised in that the rear wheel support (15, 16, 83, 84, 202, 203) is articulated directly upon the base (12, 81, 201) and upon the lateral vertical bar (13, 14, 85, 86, 204, 205), and in that the lateral vertical bar is articulated upon the base by the intermediary of a connecting rod (206), and in that the respective articulation axes of the connecting rod on the base (211), of the lateral vertical bar on the rear wheel support (212), and of the rear wheel support on the base (213), are substantially aligned in this order when the device is unfolded.

3. Foldable device according to claim 1, characterised in that each lateral vertical bar (13, 14, 85, 86) comprises a toothed wheel (18) cooperating with a toothed wheel (19) which is integral with the rear wheel support (15, 16) to which it is connected.

4. Foldable device according to claim 2, characterised in that the base (12, 81, 201) comprises two lateral bars (21, 22, 92, 93, 207, 208) connected to one another by two diagonal elements (24, 25, 94, 95, 215, 216), each diagonal element being articulated at one of its ends on one of the said lateral bars (21, 22, 92, 93, 207, 208) and its other end being articulatedly connected to the corresponding lateral vertical bar (13, 14, 85, 86, 204, 205).

5. Foldable device according to claim 1, characterised in that the two lateral vertical bars (13, 14, 204, 205) are connected to one another by two horizontal transverse bars (32, 33, 221, 222), each horizontal transverse bar comprising in the middle a toggle joint (246, 247), the two toggle joints being connected by a central vertical bar (35, 225).

6. Foldable device according to claim 5, characterised in that the said toggle joints (246, 247) open towards the top.

7. Foldable device according to claim 5, characterised in that it furthermore comprises two oblique crossbars (226, 227), each mounted articulatedly on the lateral vertical bar (204, 205) at the level of the articulation with the lower horizontal transverse bar (222) at one of their ends, and articulated on a member (228) which slides on the central vertical bar (225) at their other end.

8. Device according to claim 7, characterised in that it comprises a baby carrier constituted by two horizontal bars (231, 232) mounted articulatedly about a horizontal transverse axis on an oblique crossbar (226, 227) at one of their ends, and carrying at their other end an articulated vertical bar (233, 234), and by a band (235) made of flexible material, which constitutes the backrest and the seat and which is fixed at one of its ends to the said oblique crossbars and which is prolonged at its other end by a central holding strap (236) whose free end (237) is fixed upon a flexible strap (238) joining the free ends of the two aforesaid vertical bars (233, 234).

9. Foldable device according to claim 1, characterized in that it comprises two small transport wheels (239) in the folded position, each of which are fixed on the articulation device of the lateral vertical bars of the base and of the rear wheel supports.

10. Foldable device according to claim 1, characterised in that it comprises a locking device (97, 114) which secures the lateral vertical bars (85, 86, 204, 205) in the unfolded position of use.

11. Foldable device according to claim 10, characterised in that the locking device secures the articulation device of the lateral vertical bars in relation to the base.

12. Foldable device according to claim 1, characterised in that the lateral bars (85, 86, 204, 205) and the said central vertical bar (115, 225) comprise horizontal basket supports (116, 117, 118, 241 - 243) which extend on both sides of the said lateral vertical bars and of the said central vertical bar, in the lengthwise direction, the said supports being mounted pivotably on the lateral vertical bars and the central vertical bar.

13. Foldable device according to claim 12, characterized in that the horizontal basket supports (241, 243) of the lateral vertical bars comprise a foldable handle (127, 128, 244 - 245).

# FIG.1

# FIG.2

FIG.3

FIG.4

FIG.22

FIG.21

FIG.10

FIG.11

**3**

**1**

**2**

**8**

**4,7**

FIG.8  FIG.15

**13**

**17**
**18**
**20**
**27**
**19**
**26**

**32**

**12**

**10**

**15**

**13**

**18**
**29**
**19**
**15**
**12**

FIG.9

**22**

**31 25**  **14**

**24**

**21**  **13**

FIG.5

**13**

**17**
**20**
**15**

**26**

**10**

**12**

**28**

**27**

**26**

FIG.16

FIG.12

FIG.6

FIG.19

FIG.20

FIG.7

7

FIG.17

FIG.14

FIG.18

FIG.13

FIG.23

FIG.24

FIG.25

FIG.26

FIG.27

FIG.32

FIG.31

FIG.35

EP 0 206 872 B1

FIG.28

FIG.33

FIG.34

FIG.29

FIG.30

# FIG.36

# FIG.37

FIG.38

FIG.39

# FIG.40

# FIG.41

# FIG.42

# FIG.43

127  121  123  126  122  125  115  119

EP 0 206 872 B1

FIG.44

FIG.45

FIG.46

FIG.47